# EUROPEAN PATENT APPLICATION

(11) **EP 0 790 519 A1**
(43) Date of publication of application: **20.08.1997**
(21) Application number: 96119611.0
(22) Date of filing: 06.12.1996
(51) Int. Cl.: G02C 1/02

(54) **Lens fastening structure for rimless glasses**

(30) Priority: 14.02.1996 JP 50986/96; 31.07.1996 JP 8355/96 U
(71) Applicant: KT Optica Inc., Sabae-shi, Fukui-ken (JP)
(72) Inventor: Yamamoto, Toshiyuki, c/o KT Optica Inc., Sabae-shi, Fukui-ken (JP)
(74) Representative: VOSSIUS & PARTNER

(57) **Abstract**

Disclosed is an improved lens fastening structure for rimless glasses. It comprises front and rear pads (7a and 7b) to sandwich the lens (1) therebetween. Each pad has a curved surface formed on its application side. Use of lens sandwiching pads (7a,7b) obviates the necessity of making small holes for screws in the lens, and therefore, there is no fear of breaking or chipping the lens.

## Description

The present invention relates to rimless glasses, and more particularly to a lens fastening structure which requires no holes to be made in the lens for holding the same.

Recently a variety of rimless glasses have been widely used. Such glasses have no rims to surround lenses, but a bridge or bar "b" to connect the right and left lenses "a", as seen from Fig.11. Each lens has a joint "c" on its outer side, and an associated temple "d" is hinged to the joint "c", thereby permitting the folding of the temple "d" on the lenses "a". Fig.12 shows some details of the joint "c" at an enlarged scale.

The joint-to-lens connection is structurally similar to the bridge-to-lens connection. Specifically, an anchor "e" is bolted to the lens "a" by inserting a bolt "h" in the hole of an associated washer "g" and the hole "f" of the lens "a", and by driving the bolt "h" in an associated nut "j" to fasten the anchor "e" tightly onto the lens "a" with another washer "i" intervening between the rear side of the lens "a" and the nut "j". The joint "c", however, cannot be fixed stable to the lens "a" only with recourse to the single bolt-and-nut. The joint "c" has an application piece "k"to assure the stable attachment of the joint "c" to the lens "a".

It is necessary to make small screw holes "f" in the lens "a" in such an exact position that the application piece "k" may abut on a certain limited area of the circumference of the lens "a", but the exact hole-making is no easy work. There is a fear of chipping or breaking the lens in making such a hole close to the circumference of the lens. Another conventional rimless glasses have neither bridge-to-lens nor joint-to-lens connection such as shown in Fig.11, but it has a front upper traverse connecting foldably two temples on its opposite ends. Also, the front upper traverse has two lenses "a" depending therefrom. In this conventional rimless glasses, however, small screw holes must be made close to the circumference of each lens.

In view of the above one object of the present invention is to provide a lens fastening structure for rimless glasses to permit the fixing of lenses without making any holes in the lens, thus eliminating the fear of chipping or breaking the lens in fixing the same.

To attain this and other objects a lens fastening structure for rimless glasses according to the present invention comprises front and rear pads to sandwich the lens therebetween, each pad has a curved surface formed on its application side.

It may comprise further an elastic piece such as rubber piece to be put between the lens and the pad. The curved surface of the pad may have minute irregularities formed thereon. The front pad may have an ornamental surface on its front side.

A lens fastening structure according to the present invention may be used in an extra-lens attaching type of rimless glasses.

Other objects and advantages of the present invention will be understood from the following description of lens fastening structures according to preferred embodiments of the present invention, which are shown in accompanying drawings.
Fig.1 is a perspective view of a pair of rimless glasses using lens fastening structures according to a first embodiment of the present invention;
Fig.2 is a cross-section of the lens fastening structure, showing how the lens is connected to the temple;
Fig.3 is a cross-section of a lens fastening structure according to a second embodiment of the present invention, showing how the lens is connected to the temple;
Fig.4 is a perspective view of a pair of rimless glasses using lens fastening structures according to a third embodiment of the present invention;
Fig.5 is an exploded view of the inter-lens bridge and lens fastening structure according to the third embodiment;
Fig.6 is a cross-section of the inter-lens bridge and lens fastening structure;
Fig.7 shows a lens having a projection on its inner side;
Fig.8 is a perspective view of one lens and associated lens fastening structure according to a fourth embodiment of the present invention;
Fig.9 is a perspective view of a pair of rimless glasses using lens fastening structures according to a fifth embodiment of the present invention;
Fig.10 is a cross section of an extra lens and a lens fastening structure having means for holding the extra lens on the front side of the lens of the rimless glasses;
Fig.11 is a perspective view of a pair of conventional rimless glasses; and
Fig.12 is a cross-section of the joint-to-lens connection in the rimless glasses of Fig.11.

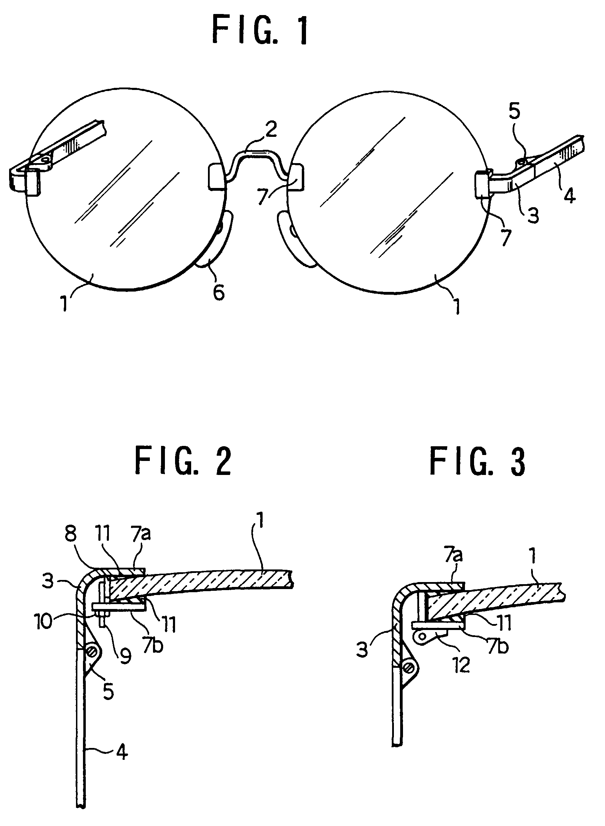

Referring to Fig.1, a pair of rimless glasses using lens fastening structures according to the present invention comprises two lenses 1, 1 connected by a bridge or bar 2, and two temples 4, 4 hinged to the lenses 1, 1, specifically by using hinged joints 3, each having a hinge 5 on one end, thereby permitting the temple 4 to fold on the lenses 1, 1. The bridge 2 has nose pads 6, 6 fixed to its opposite ends. The structure described so far is similar to the conventional rimless glasses shown in Fig.11.

The feature of the claimed invention is found in the lens-to-lens connection bridge 2 and the temple-to-lens connection joint 3. The lens-to-lens connection bridge 2 has front and rear pads 7a and 7b fixed at either end to sandwich the lens therebetween. Likewise, the temple-to-lens connection joint 3 has front and rear pads 7a and 7b on one end, and a hinge 5 at the other end, connecting the joint 3 to the temple 4.

Fig.2 shows how the joint 3 is fixed to the outer side of the lens 1. As shown in the drawing, the front pad 7a has an upright abutment 8 on its inside to abut against the outer circumference of the lens 1, and the upright abutment 8 has a screw 9 fixed thereto. The rear pad 7b is fixed to the front pad 7a by tightening the screw 9 with an associated nut 9, thus fixing the joint 3 to the lens 1 so that the lens 1 is fixedly sandwiched between the front and rear pads 7a and 7b. As seen from the drawing, rubber pieces 11, 11 are laid between the lens 1 and the front or rear pad 7a or 7b to prevent the direct contact between the lens 1 and the pad 7a or 7b.

Such rubber pieces have an effect of preventing the concentration of stress to the lens 1, and at the same time, increasing the friction between the lens 1 and the pad 7a or 7b, thereby preventing any slipping which otherwise, would be caused between the lens 1 and the pad 7a, or 7b. The rubber piece may be replaced by a piece of elastic material, and then the pad can be coated with such an elastic material. A washer may be used with the nut 10, and then an anti-loosening paint may be applied to the nut 10 lest it should loose.

The lens-to-lens connection bridge 2 is structurally same as the lens-to-temple connection joint 3. The pad 7 is almost rectangular, and must be large enough to hold the lens steadily without applying unduly strong force per unit area of the lens. The pad surface, therefore, may be large enough to provide an ornamental space. Thus, it may be colored, or may be coated with resin and enamel ware. The rear pad may have same size and shape to be coextensive with the front pad, but it may be somewhat smaller than the front pad.

The rear pad 7b can be tightly fastened to the front pad 7a by a leverage means, as shown in Fig.3. A lever 12 is raised to loosen the rear pad 7b, and the lever 12 is made to fall, and then the rear pad 7b is tightly fastened to the front pad 7a, thereby fixing the joint 3 to the lens 1, tightly sandwiching the lens 1 between the front and rear pads 7a and 7b.

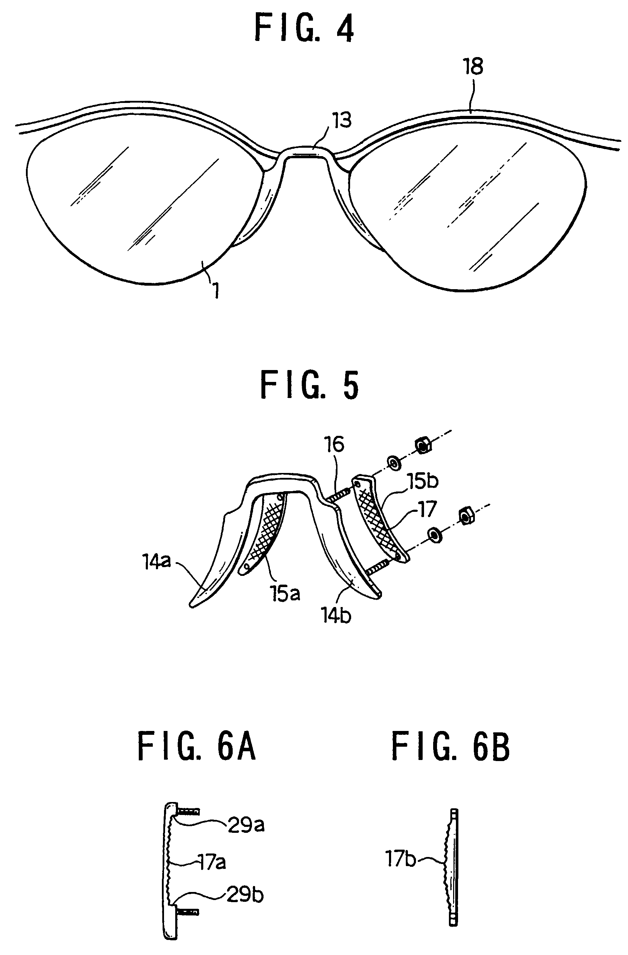

Referring to Fig.4, a pair of rimless glasses using lens fastening structures according to another embodiment of the present invention uses only a single bar 13 to connect and support two lenses 1, 1. The bar 13 is shown in Fig.5 as comprising a bifurcate front pad 14a, 14b and two rear pad pieces 15a, 15b in combination. The bifurcate front pad 14a, 14b has two screws 16, 16 on the rear side of each leg, and each counter rear pad piece 15a or 15b has two holes to permit the screws 16, 16 to pass therethrough. Alternatively the rear pad pieces 15 can be bolted directly to the bifurcate front pad 14 in the opposite way.

As seen from the drawing, the rear pad piece may be similar to the leg of the bifurcate front pad 14a, 14b in shape to sandwich the lens therebetween, thus fixedly holding the lens. The rear pad piece has minute irregularities formed on its inside, thereby increasing the friction to the lens to assure even still firm gripping of the lens so that the lens may be guaranteed to be free of any slipping away from the lens-to-lens connection bar. Likewise, the bifurcate front pad 14a, 14b may have minute irregularities formed on its inside. In Fig.4 the lens-to-lens connection bar 13 is soldered to the center of the front traverse 18, and two temples (not shown) are hinged to the opposite ends of the front traverse 18, thereby permitting the folding of the temples on the lenses.

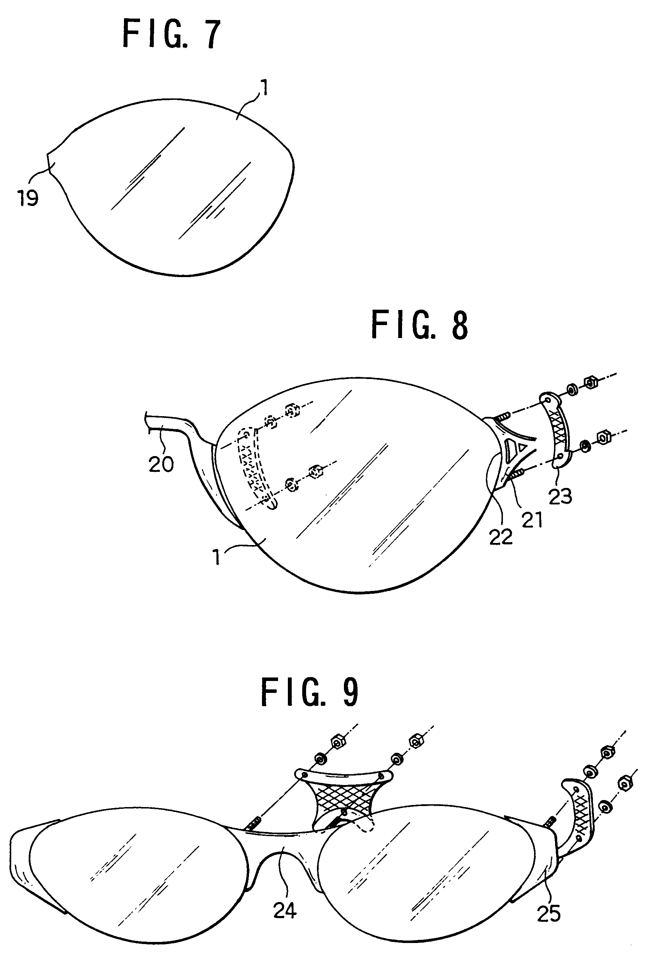

Figs.6a and 6b show the bifurcate front pad 14 and the rear pad piece 15 in section. As shown, the rear concave surface 17a of the front pad leg and the front convex surface 17b of the rear pad piece can be applied to fit on the lens 1, and the concave and convex surfaces have irregularities formed thereon. Fig.7 shows a lens 1 as having a projection 19 on its one side, which projection 19 is to be sandwiched between the front and rear pads 14 and 15. This projection may be omitted. However, if such side-projected lenses are used, the concave and convex areas must be formed at a lower level in the front and rear pads than in Fig.6. Specifically in the front pad the upper limit-defining edge 29a is lowered to abut the upper edge of the projection 19 of the lens 1 while permitting the lower limit-defining edge to abut the lower edge of the projection 19 of the lens 1.

Referring to Fig.8, a pair of rimless glasses using lens fastening structures according to still another embodiment of the present invention uses a lens-to-lens connection bridge 20 and two lens-to-temple connection joints 21. The lens-to-lens connection bridge 20 are structurally similar to the lens-to-lens connection bar 13 in Fig.4. The joint 21 has a front pad 22 and a rear pad 23 in combination.

The joint has an associated temple hinged thereto for permit the folding of the temple on the lenses. As seen from Fig.8, the front and rear pads 22 and 23 sandwich the lens 1, and these pads are fastened with screws with their concave and convex surfaces applied to the front and rear surfaces of the lens. These curved surfaces have irregularities formed thereon to prevent any slipping of pads apart from the lens. Although not visible, the lens has two projections on both sides to be sandwiched both in the lens-to-lens connection and in the lens-to-joint connection.

Referring to Fig.9, a pair of rimless glasses using lens fastening structures according to further still another embodiment of the present invention uses a lens-to-lens connection bridge 24 and two lens-to-temple connection joints 25. These lens-to-lens connection bridge 24 and lens-to-temple connection joints 25 are structurally same as those in Fig.8, but are different only in shape.

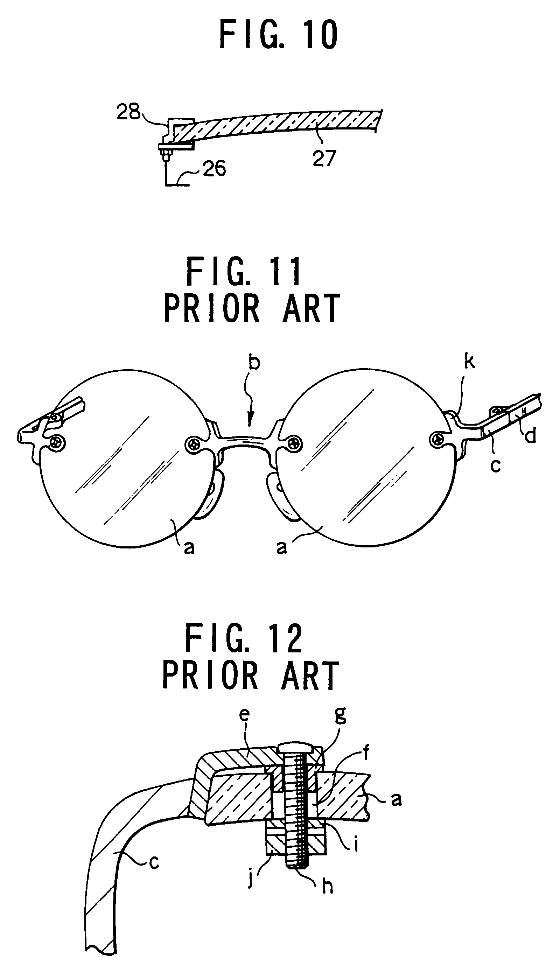

Fig.10 shows an extra lens suspender which is used to attach an extra lens such as sunglasses to the front of glasses. It has a resilient pin 26 fixed to its lens fastening structure 28. The lens fastening structure 28 comprises front and rear pads to sandwich the extra lens 27 therebetween.

As may be understood from the above, a lens fastening structure according to the present invention is capable of fixedly holding a lens with front and rear pads, thus obviating the necessity of making small holes for screws in the lens, and therefore, there is no fear of breaking or chipping the lens. Still advantageously, a retailer need not be nervous of making screw holes at exact positions in the lens. The front or rear pad is large enough to prevent the concentration of stress, which would be caused if such a pad were too small to distribute the stress in the lens. Thus, the lens cannot be subjected to unduly strong stress. The stable holding of the lens between the front and rear tabs can be assured by forming irregularities in the front and rear pads on their sides on which these pads are to be applied to the lens.

## Claims

1. A lens fastening structure for rimless glasses characterized in that it comprises front and rear pads (7a and 7b) to sandwich the lens (1) therebetween, each pad has a curved surface formed on its application side.

2. A lens fastening structure for rimless glasses according to claim 1 wherein it further comprises an elastic piece (11) such as rubber piece to be put between the lens (1) and the pad (7a,7b).

3. A lens fastening structure for rimless glasses according to claim 1 or 2 wherein the curved surface of the pad (7a,7b) has minute irregularities (17a,17b) formed thereon.

4. A lens fastening structure for rimless glasses according to claim 1, 2 or 3 wherein the front pad (7a) has an ornamental surface on its front side.

5. A lens fastening structure for extra-lens attaching type of rimless glasses characterized in that it comprises front and rear pads (7a and 7b) to sandwich the lens (1) therebetween, each pad has a curved surface formed on its application side.
